# FASCICULE DE BREVET EUROPEEN

(11) **EP 0 583 185 B1**
(45) Date de publication et mention de la délivrance du brevet: **10.09.1997**
(21) Numéro de dépôt: 93401904.3
(22) Date de dépôt: 22.07.1993
(51) Int. Cl.: G02B 6/25

(54) **Procédé et dispositifs pour couper obliquement un ruban de fibres optiques**
Verfahren und Vorrichtung zum schrägen Schneiden eines faseroptischen Bandkabels
Method and apparatus for obliquely cutting a ribbon of optical fibres

(30) Priorité: 24.07.1992 FR 9209170
(43) Date de publication de la demande: 16.02.1994
(73) Titulaire: ALCATEL ALSTHOM COMPAGNIE GENERALE D'ELECTRICITE, 75008 Paris (FR)
(72) Inventeur: Hakoun, Roland, F-95330 Domont (FR); Reslinger, Michel, F-91070 Bondoufle (FR)
(74) Mandataire: Pothet, Jean Rémy Emile Ludovic

(56) Documents cités:
- EP-A- 0 455 141
- WO-A-90/03338
- DE-A- 3 735 885
- FR-A- 2 646 521
- PATENT ABSTRACTS OF JAPAN vol. 5, no. 16 (C-41)(688) 30 Janvier 1981 & JP-A-55 144 444 (FURUKAWA)

## Description

La présente invention concerne un procédé pour couper obliquement un ruban de fibres optiques de sorte que les faces clivées des fibres du ruban se trouvent toutes dans un même plan de coupe non perpendiculaire à l'axe longitudinal du ruban.

Pour effectuer le raccordement d'un ruban de fibres optiques à un autre, il est nécessaire de préparer les extrémités des fibres le constituant afin d'obtenir un fonctionnement optimal de la liaison optique réalisée. Classiquement, on coupe les extrémités des fibres du ruban de sorte que leurs faces à raccorder se trouvent toutes dans un même plan orthogonal à leurs axes longitudinaux.

Lorsque les rubans à raccorder sont placés bout à bout, avec les faces planes à raccorder des fibres optiques mises en coïncidence, des taux de réflexion très élevés peuvent être atteints au niveau de l'interface, ce qui risque de dégrader les caractéristiques de transmission de la liaison réalisée.

Pour pallier cet inconvénient dans le cas du raccordement de fibres optiques unitaires, il est connu de réaliser, à l'extrémité de la fibre, une surface plane non perpendiculaire à l'axe de la fibre, la normale à cette surface faisant par exemple un angle de cinq degrés avec l'axe de la fibre. On crée ainsi un défaut systématique permettant d'éliminer les réflexions parasites.

La demande de brevet japonaise JP-57 24903 décrit un procédé pour couper obliquement une fibre optique, ce procédé consistant à fixer la fibre en deux points, au moyen de deux pinces, à la tordre autour de son axe longitudinal, à amorcer une rupture au moyen d'un tranchant en diamant puis à la tendre en appliquant un galbe contre elle jusqu'à ce qu'elle se clive. On obtient alors un plan de coupe dont l'angle d'inclinaison est fonction du couple de torsion et de la force de tension appliqués à la fibre.

Un tel procédé ne peut être utilisé dans le cas d'un ruban constitué de plusieurs fibres optiques disposées parallèlement les unes aux autres dans une gaine de protection commune. On comprend bien en effet qu'il n'est pas possible d'appliquer à chacune des fibres du ruban un couple de torsion identique autour de son axe longitudinal. Ainsi, la coupe obtenue avec une telle méthode appliquée à un ruban de fibres optiques n'est pas satisfaisante : les faces extrêmes des fibres clivées ne se trouvent pas toutes dans un même plan incliné.

Le but de la présente invention est donc de mettre au point un procédé pour couper obliquement un ruban de fibres optiques de sorte que toutes les extrémités clivées des fibres du ruban se trouvent dans un même plan non perpendiculaire à l'axe longitudinal du ruban.

La présente invention propose à cet effet un procédé pour couper obliquement un ruban de fibres optiques constitué d'une pluralité de fibres optiques toutes parallèles à un axe dit longitudinal dudit ruban, situées dans un même plan horizontal, appelé plan dudit ruban, et protégées par une gaine commune, caractérisé en ce qu'il comporte les opérations suivantes :
- on retire ladite gaine sur une portion dudit ruban,
- on immobilise ledit ruban en deux points situés de part et d'autre de ladite portion dégainée,
- on avance un galbe le long d'un axe de déplacement orthogonal audit plan horizontal pour tendre ladite portion de manière à incliner une partie de ladite portion dégainée par rapport audit plan horizontal,
- on avance un tranchant en regard dudit galbe et le long d'un axe de déplacement parallèle à celui dudit galbe ou confondu avec celui dudit galbe pour couper ladite portion dégainée au niveau de ladite partie inclinée.

Avantageusement, selon une première variante, on immobilise le ruban en deux points situés de part et d'autre de la portion dégainée, de sorte que la portion dégainée se trouve dans un plan incliné par rapport à celui du ruban.

Selon une autre variante possible, l'axe de déplacement du tranchant est parallèle à celui du galbe et distinct de ce dernier.

Selon le procédé de l'invention, on coupe le ruban au niveau d'une portion inclinée de ce dernier afin d'obtenir un clivage oblique. L'inclinaison est obtenue soit en décalant les points d'immobilisation par rapport au plan du ruban, soit en séparant l'axe d'avance du galbe de celui du tranchant de manière à venir couper le ruban contre un flanc du galbe, et non pas sur l'axe de symétrie de ce dernier, c'est-à-dire en un point où le ruban est incliné.

Grâce au procédé selon l'invention, toutes les fibres du ruban sont dans le même état au moment de la coupe et sont coupées de sorte que leurs faces extrêmes se trouvent dans un même plan incliné. L'inclinaison de ce plan est bien entendu fonction de l'inclinaison du ruban par rapport au tranchant.

Un dispositif possible pour mettre en oeuvre le procédé de l'invention comporte :
- deux supports situés à distance l'un de l'autre et possédant chacun une surface plane présentant une rainure, ces surfaces planes appartenant à des plans parallèles entre eux et distincts de sorte qu'une fois le ruban inséré dans l'une et l'autre des rainures, la portion dégainée se trouve entre les deux supports et inclinée par rapport aux plans de ces derniers,
- deux mors en relation respectivement avec l'un et l'autre des deux supports et destinés à venir immobiliser le ruban au niveau de chacun de ces supports,
- un galbe situé entre les deux supports,
- un tranchant situé entre les deux supports, le galbe et le tranchant se trouvant de part et d'autre du plan du ruban,
- des moyens pour avancer le galbe le long d'un axe de déplacement orthogonal aux plans des deux supports et l'appliquer contre la portion dégainée afin de la tendre entre les deux supports,
- des moyens pour avancer le tranchant le long d'un axe de déplacement orthogonal aux plans des deux supports et l'appliquer, en regard du galbe, contre la portion dégainée afin de la couper.

Un autre dispositif de mise en oeuvre possible du procédé selon l'invention comporte :
- deux supports situés à distance l'un de l'autre et possédant chacun une surface plane présentant une rainure destinée à recevoir le ruban de sorte que la portion dégainée se trouve entre les deux supports,
- deux mors en relation respectivement avec l'un et l'autre des deux supports et destinés à venir immobiliser le ruban au niveau de chacun de ces supports,
- un galbe situé entre les deux supports,
- un tranchant situé entre les deux supports, le galbe et le tranchant se trouvant de part et d'autre du plan du ruban,
- des moyens pour avancer le galbe le long d'un axe de déplacement orthogonal aux plans des deux supports et l'appliquer contre la portion dégainée afin de la tendre entre les deux supports,
- des moyens pour avancer le tranchant le long d'un axe de déplacement orthogonal aux plans des deux supports et distinct de l'axe de déplacement du galbe, et l'appliquer, en regard du galbe, contre la portion dégainée afin de la couper.

D'autres caractéristiques et avantages de la présente invention apparaîtront dans la description suivante d'un dispositif selon l'invention, donnée à titre illustratif et nullement limitatif.

Dans les figures suivantes :
- la figure 1 est une coupe schématique d'un premier dispositif selon l'invention,
- la figure 2 est une coupe schématique d'un deuxième dispositif selon l'invention.

Dans ces figures, les éléments communs portent les mêmes numéros de référence.

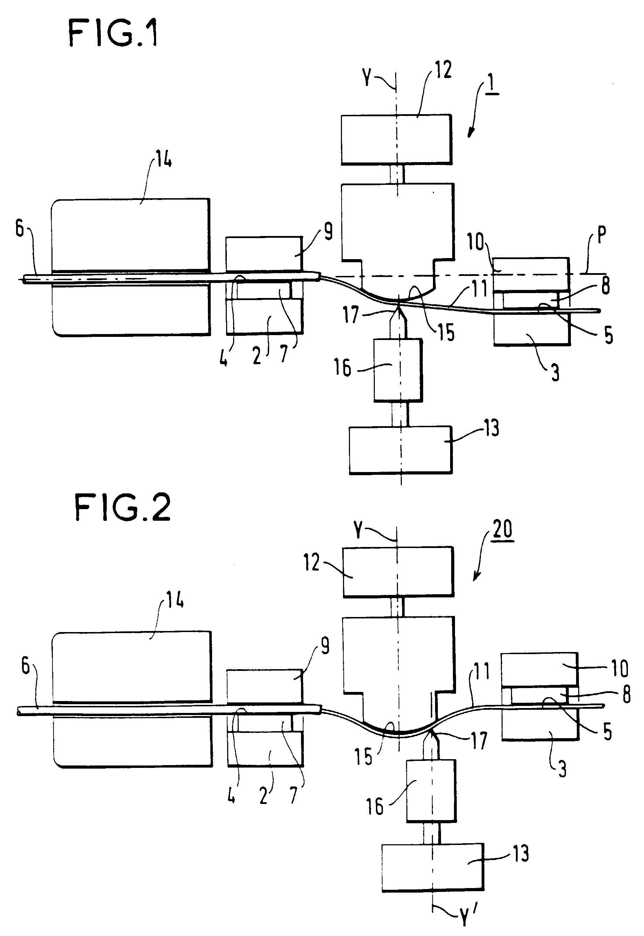

On voit en figure 1 un dispositif 1 selon l'invention. Le dispositif 1 comprend deux supports plans identiques 2 et 3. Une pièce parallélépipédique 7 est posée sur le support 2 et présente à sa surface une rainure 4. Un ruban de fibres optiques 6, porté par un mandrin 14 et dont on a dégainé une portion 11, est inséré dans la rainure 4 du support 2 au niveau de sa partie encore gainée. Pour maintenir le ruban 6 au niveau du support 2, un mors 9 mobile autour d'une charnière (non représentée) d'axe parallèle à la rainure 4 est rabattu sur le support 2.

Le support 3, placé à distance du support 2, présente à sa surface une rainure 5. La portion dégainée 11 dépassant au-delà du support 2 est insérée dans la rainure 5 de sorte que la portion 11 se trouve entre les supports 2 et 3. Pour la maintenir, on utilise un autre mors 10 mobile autour d'une charnière (non représentée) d'axe parallèle à la rainure 5 et venant serrer la portion 11 par l'intermédiaire d'une autre pièce parallélépipédique 8.

Les surfaces de la pièce 7 et du support 3 appartiennent chacune à un plan horizontal. Ces deux plans sont parallèles entre eux mais distincts, de sorte que la portion 11 est inclinée par rapport à la portion non dégainée du ruban 6 maintenue par le mandrin 14, qui est toujours horizontale et se trouve dans un plan P orthogonal à celui de la figure 1 et dont la trace est représentée dans cette figure.

Le mandrin 14 peut être amovible et être rendu solidaire du dispositif 1 par enfichage sur des plots (non représentés) par exemple.

Le dispositif 1 comporte par ailleurs un galbe 15 situé entre les supports 2 et 3, à peu près à égale distance entre ces derniers. Le galbe 15 est capable d'effectuer, grâce à un dispositif 12 adapté, des mouvements de translation parallèlement à un axe de déplacement Y orthogonal au plan P. Par translation le long de l'axe Y, on applique le galbe 15 contre la portion 11 ce qui a pour effet de la mettre en tension.

Enfin, le dispositif 1 comprend un tranchant en diamant 16 situé entre les supports 2 et 3 en regard du galbe 15, de l'autre côté de la portion 11. Le tranchant en diamant 16 est également capable d'effectuer, grâce à un dispositif 13 adapté, des mouvements de translation le long de l'axe Y de manière à venir entailler la portion 11 en regard du galbe 15 lorsqu'elle est mise en tension par ce dernier. La lame 17 du tranchant en diamant 16, orthogonale à l'axe Y et au plan de la figure 1, est solidaire d'un ressort (non représenté) permettant d'appliquer au ruban à cliver une pression constante et contrôlée, de manière à rendre la coupe plus précise.

Pour couper obliquement un ruban de fibres optiques à l'aide du dispositif de la figure 1, on commence par dégainer un extrémité du ruban 6, puis on l'installe dans les rainures de réception 4 et 5 de sorte que la portion dégainée 11 se trouve entre les supports 2 et 3.

Une fois les mors 12 et 13 rabattus, on déplace le galbe 15 le long de l'axe Y en direction du tranchant 16 pour l'appliquer contre la portion 11 afin de la mettre en tension, puis on coupe les fibres à l'aide du tranchant 16 en déplaçant ce dernier le long de l'axe Y dans la direction du galbe 15. On peut ensuite retirer la partie à conserver du ruban 6 en relevant les mors 12 et 13.

La précision de la coupe obtenue est de plus ou moins 1°. Par ailleurs, la coupe effectuée est facilement reproductible.

En pratique, les fibres du ruban 6 sont coupées par le tranchant 16 avant d'être appliquées contre le galbe 15. On obtient une coupe oblique puisque la portion 11 est inclinée par rapport à la lame 17 du tranchant 16.

On a représenté en figure 2 un autre dispositif possible, référencé 20, utilisant le principe de la présente invention.

La différence principale entre le dispositif 1 et le dispositif 20 réside dans le fait que le galbe 15 et le tranchant 16 ne se déplacent plus le long d'un même axe Y, mais le long d'axes de déplacement distincts, appelés respectivement Y et Y'. Les axes Y et Y' sont parallèles entre eux, et situés à une distance l'un de l'autre telle que le tranchant 16 se trouve toujours en regard du galbe 15. Il n'est plus nécessaire dans ce cas de placer les rainures de réception du ruban dans deux plans distincts puisque l'on vient couper le ruban alors qu'il est appliqué contre une partie du galbe inclinée par rapport à la lame 17.

L'inclinaison est donc obtenue grâce à la séparation des axes de déplacement Y et Y'.

Pour couper obliquement un ruban de fibres optiques à l'aide du dispositif 20, on commence par dégainer un extrémité du ruban 6, puis on l'installe dans les rainures de réception 4 et 5 de sorte que la portion dégainée 11 se trouve entre les supports 2 et 3.

Une fois les mors 12 et 13 rabattus, on déplace le galbe 15 le long de l'axe Y en direction du tranchant 16 pour l'appliquer contre la portion 11 afin de la mettre en tension, puis on coupe les fibres à l'aide du tranchant 16 en déplaçant ce dernier le long de l'axe Y' dans la direction du galbe 15. On peut ensuite retirer la partie à conserver du ruban 6 en relevant les mors 12 et 13.

Le dispositif 20 conduit aux mêmes résultats que le dispositif 1 pour ce qui est de la qualité et de la précision de la coupe effectuée. Il présente également les mêmes avantages que le dispositif 1.

Bien entendu, l'invention n'est pas limitée aux modes de réalisation qui viennent d'être décrits.

En particulier, il est possible, dans le dispositif 20, de placer les rainures de réception dans des plans différents, ainsi que présenté en figure 1.

Il est par ailleurs également possible, dans le dispositif 1, de séparer les axes de déplacement du galbe et du tranchant, en prenant toujours garde à maintenir le tranchant en regard du galbe.

Enfin, on pourra remplacer tout moyen par un moyen équivalent sans sortir du cadre de l'invention.

## Revendications

1. Procédé pour couper obliquement par rapport au plan de ses fibres un ruban de fibres optiques (6) constitué d'une pluralité de fibres optiques toutes parallèles à un axe dit longitudinal dudit ruban, situées dans un plan (P), appelé plan dudit ruban, et protégées par une gaine commune,
caractérisé en ce qu'il comporte les opérations suivantes :
- on retire ladite gaine sur une portion (11) dudit ruban (6),
- on immobilise deux segments dudit ruban (6) sur deux surfaces planes, lesdits segments étant situés de part et d'autre de ladite portion dégainée (11), lesdites surfaces étant parallèles entre elles,
- on avance un galbe (15) le long d'un axe de déplacement (Y) orthogonal auxdites surfaces planes pour tendre ladite portion (11) de manière à incliner une partie de ladite portion dégainée par rapport auxdites surfaces,
- on avance un tranchant (16) en regard dudit galbe (15) et le long d'un axe de mouvement soit confondu avec celui du galbe, si les deux surfaces planes se trouvent dans des plans différents, soit déplacé par rapport à celui dudit galbe le long de l'axe du ruban de manière à couper ladite portion dégainée (11) au niveau de ladite partie inclinée.

2. Procédé selon la revendication 1 caractérisé en ce que ledit ruban (6) est immobilisé de sorte que ladite portion dégainée se trouve dans un plan incliné par rapport à celui dudit ruban.

3. Procédé selon l'une des revendications 1 ou 2 caractérisé en ce que l'axe de mouvement (Y') dudit tranchant (16) est parallèle à celui (Y) dudit galbe (15) et distinct de ce dernier.

4. Dispositif de mise en oeuvre du procédé selon la revendication 2 caractérisé en ce qu'il comporte :
- deux supports (3, 7) situés à distance l'un de l'autre et possédant chacun une surface plane présentant une rainure (4, 5), lesdites surfaces planes appartenant à des plans parallèles entre eux et distincts de sorte qu'une fois ledit ruban (6) inséré dans l'une et l'autre desdites rainures (4, 5), ladite portion dégainée (11) se trouve entre lesdits deux supports et inclinée par rapport aux plans de ces derniers,
- deux mors (9, 10) en relation respectivement avec l'un et l'autre desdits deux supports (3, 7) et destinés à venir immobiliser ledit ruban (6) au niveau de chacun desdits supports (3, 7),
- un galbe (15) situé entre lesdits deux supports,
- un tranchant (16) situé entre lesdits deux supports, ledit galbe (15) et ledit tranchant (16) se trouvant de part et d'autre dudit plan (P) dudit ruban (6),
- des moyens (12) pour avancer ledit galbe (15) le long d'un axe de déplacement (Y) orthogonal aux plans desdits deux supports et l'appliquer contre ladite portion dégainée afin de la tendre entre lesdits deux supports,
- des moyens (13) pour avancer ledit tranchant (16) le long d'un axe de mouvement (Y) orthogonal aux plans desdits deux supports et l'appliquer, en regard dudit galbe (15), contre ladite portion dégainée (11) afin de la couper.

5. Dispositif de mise en oeuvre du procédé selon la revendication 3 caractérisé en ce qu'il comporte :
- deux supports (3, 7) situés à distance l'un de l'autre et possédant chacun une surface plane présentant une rainure (4, 5) destinée à recevoir ledit ruban (6) de sorte que ladite portion dégainée (11) se trouve entre lesdits deux supports,
- deux mors (9, 10) en relation respectivement avec l'un et l'autre desdits deux supports et destinés à venir immobiliser ledit ruban au niveau de chacun desdits supports (3, 7),
- un galbe (15) situé entre lesdits deux supports,
- un tranchant (16) situé entre lesdits deux supports, ledit galbe (15) et ledit tranchant (16) se trouvant de part et d'autre dudit plan (P) dudit ruban,
- des moyens (12) pour avancer ledit galbe (15) le long d'un axe de déplacement (Y) orthogonal aux plans desdits deux supports et l'appliquer contre ladite portion dégainée (11) afin de la tendre entre lesdits deux supports,
- des moyens (13) pour avancer ledit tranchant (16) le long d'un axe de mouvement (Y') orthogonal aux plans desdits deux supports et distinct de l'axe de déplacement (Y) dudit galbe (15), et l'appliquer, en regard dudit galbe (15), contre ladite portion dégainée (11) afin de la couper.

## Patentansprüche

1. Verfahren, um ein Band (6) mit Lichtleitfasern in Bezug auf die Ebene seiner Fasern schräg abzuschneiden, das aus einer Vielzahl von Lichtleitfasern besteht, die alle parallel zu einer Längsachse des Bands liegen und sich einer Ebene (P) befinden, die Bandebene genannt wird, und die von einer gemeinsamen Hülle geschützt werden,
dadurch gekennzeichnet, daß es die folgenden Schritte aufweist:
- man entfernt die Hülle über einen Bereich (11) des Bands (6),
- man legt zwei Segmente des Bands (6) auf zwei ebenen Flächen fest, wobei die Segmente sich zu beiden Seiten des abisolierten Bereichs (11) befinden und wobei die Flächen parallel zueinander liegen,
- man schiebt einen Formkörper (15) entlang einer Verschiebeachse (Y) senkrecht zu den ebenen Flächen vor, um den Bereich (11) so zu spannen, daß ein Teil des abisolierten Bereichs in Bezug auf die Flächen schräg liegt,
- man schiebt ein Messer (16) vor den Formkörper (15) und entlang einer Bewegungsachse vor, die entweder mit der des Formkörpers zusammenfällt, wenn die beiden ebenen Flächen sich in unterschiedlichen Ebenen befinden, oder sich in einem Abstand entlang der Achse des Bands zur Achse des Formkörpers befindet, um den abisolierten Bereich (11) in Höhe des geneigten Teils zu zerschneiden.

2. Verfahren nach Anspruch 1, dadurch gekennzeichnet, daß das Band (6) so festgelegt ist, daß der abisolierte Bereich sich in einer in Bezug auf die Ebene des Bands geneigten Ebene befindet.

3. Verfahren nach einem der Ansprüche 1 oder 2, dadurch gekennzeichnet, daß die Bewegungsachse (Y') des Messers (16) parallel zu der (Y) des Formkörpers und verschieden von ihr ist.

4. Vorrichtung zur Durchführung des Verfahrens nach Anspruch 2, dadurch gekennzeichnet, daß sie aufweist:
- zwei Träger (3, 7), die entfernt voneinander angeordnet sind und je eine ebene Fläche mit einer Nut (4, 5) aufweisen, wobei die ebenen Flächen zu untereinander parallelen und voneinander unterschiedlichen Ebenen gehören, so daß, wenn das Band (6) in die beiden Nuten (4, 5) eingeführt ist, der abisolierte Bereich (11) zwischen den beiden Trägern und in Bezug auf deren Ebenen geneigt verläuft,
- zwei Spannbacken (9, 10), die je mit einem der beiden Träger (3, 7) in Verbindung stehen und die das Band (6) in Höhe jedes dieser Träger (3, 7) festsetzen sollen,
- einen Formkörper (15), der zwischen den beiden Trägern angeordnet ist,
- ein Messer (16), das zwischen den beiden Trägern angeordnet ist, wobei der Formkörper (15) und das Messer (16) sich zu beiden Seiten der Ebene (P) des Bands (6) befinden,
- Mittel (12), um den Formkörper (15) entlang einer Verschiebeachse (Y) senkrecht zu den Ebenen der beiden Träger zu verschieben und an den abisolierten Bereich anzulegen, um ihn zwischen den beiden Trägern zu spannen,
- Mittel (13), um das Messer (16) entlang einer Bewegungsachse (Y) senkrecht zu den Ebenen der beiden Träger zu verschieben und gegenüber dem Formkörper (15) gegen den abisolierten (11) Bereich anzulegen, um ihn zu durchschneiden.

5. Vorrichtung zur Durchführung des Verfahrens nach Anspruch 3, dadurch gekennzeichnet, daß sie aufweist:
- zwei Träger (3, 7), die entfernt voneinander angeordnet sind und je eine ebene Fläche mit einer Nut (4, 5) aufweisen, die das Band (6) aufnehmen soll, so daß der abisolierte Bereich (11) sich zwischen den beiden Trägern befindet,
- zwei Spannbacken (9, 10), die je mit einem der beiden Träger in Verbindung stehen und die das Band (6) in Höhe jedes dieser Träger (3, 7) festsetzen sollen,
- einen Formkörper (15), der zwischen den beiden Trägern angeordnet ist,
- ein Messer (16), das zwischen den beiden Trägern angeordnet ist, wobei der Formkörper (15) und das Messer (16) sich zu beiden Seiten der Ebene (P) des Bands befinden,
- Mittel (12), um den Formkörper (15) entlang einer Verschiebeachse (Y) senkrecht zu den Ebenen der beiden Träger zu bewegen und gegen den abisolierten Bereich anzulegen, um ihn zwischen den beiden Trägern zu spannen,
- Mittel (13), um das Messer (16) entlang einer von der Verschiebeachse (Y) des Formkörpers (15) verschiedenen Verschiebeachse (Y') senkrecht zu den Ebenen der beiden Träger zu verschieben und es gegenüber dem Formkörper (15) gegen den abisolierten (11) Bereich anzulegen, um ihn zu durchschneiden.

## Claims

1. A method of cutting an optical fiber ribbon (6) obliquely relative to the plane of its fibers, the ribbon being constituted by a plurality of optical fibers that are all parallel to a "longitudinal" axis of said ribbon, the fibers all being situated in the plane (P) referred to as the plane of said ribbon, and being protected by a common sheath, the method being characterized in that it comprises the following steps:
a portion (11) of said ribbon (6) is stripped of its sheath;
two segments of said ribbon (6) on two plane surfaces are held stationary, said segments being situated on either side of said stripped portion (11), said surfaces being parallel with each other;
a curved anvil (15) is advanced along a displacement axis (Y) orthogonal to said plane surfaces so as to tension said portion (11) in such a manner as to incline a part of said stripped portion relative to said surfaces; and
a cutter (16) is advanced facing said anvil (15) and along a displacement axis, either coinciding with that of said anvil, if the two plane surfaces are in different planes, or displaced relative to that of said anvil along the axis of the ribbon so as to cut said stripped portion (11) in said inclined part.

2. A method according to claim 1, characterized in that said ribbon (6) is held so that said stripped portion lies in a plane that is inclined relative to the plane of said ribbon.

3. A method according to claim 1 or 2, characterized in that the displacement axis (Y') of said cutter (16) is parallel to the displacement axis (Y) of said anvil (15) and distinct therefrom.

4. Apparatus for implementing the method according to claim 2, characterized in that it comprises:
two supports (3, 7) situated at a distance apart from each other, and each possessing a plane surface that includes a groove (4, 5), said plane surfaces occupying planes that are mutually parallel and distinct so that once said ribbon (6) is inserted in both of said grooves (4, 5), said stripped portion (11) extends between said two supports and is inclined relative to the planes thereof;
two jaws (9, 10) co-operating with respective ones of said two supports (3, 7) and designed to hold said ribbon (6) in each of said supports (3, 7);
a curved anvil (15) situated between said two supports;
a cutter (16) situated between said two supports, said anvil (15) and said cutter (16) being on opposite sides of said plane (P) of said ribbon (6);
means (12) for advancing said anvil (15) along a displacement axis (Y) orthogonal to the planes of said two supports and for pressing it against said stripped portion so as to tension said stripped portion between said two supports; and
means (13) for advancing said cutter (16) along a displacement axis (Y) orthogonal to the planes of said two supports and for applying it against said stripped portion (11) over said anvil (15) in order to cut the stripped portion.

5. Apparatus for implementing the method according to claim 3, characterized in that it comprises:
two supports (3, 7) situated at a distance apart from each other, and each possessing a plane surface that includes a groove (4, 5) for receiving said ribbon (6) so that said stripped portion (11) lies between said two supports;
two jaws (9, 10) co-operating with respective ones of said two supports (3, 7) and designed to hold said ribbon (6) in each of said supports (3, 7);
a curved anvil (15) situated between said two supports;
a cutter (16) situated between said two supports, said anvil (15) and said cutter (16) being on opposite sides of said plane (P) of said ribbon (6);
means (12) for advancing said anvil (15) along a displacement axis (Y) orthogonal to the planes of said two supports and for pressing it against said stripped portion so as to tension said stripped portion (11) between said two supports; and
means (13) for advancing said cutter (16) along a displacement axis (Y') orthogonal to the planes of said two supports and distinct from the displacement axis (Y) of said anvil (15), and for applying it against said stripped portion (11) over said anvil (15) in order to cut the stripped portion.
